# FASCICULE DE BREVET EUROPEEN

(11) **EP 0 635 194 B1**
(45) Date de publication et mention de la délivrance du brevet: **07.06.2000**
(21) Numéro de dépôt: 94440045.6
(22) Date de dépôt: 13.07.1994
(51) Int. Cl.: A01B 49/06, A01B 73/00

(54) **Machine combinée de travail du sol et de semis dont le semoir est bien tenu durant le transport**
Gerätekombination zur Bodenbearbeitung und zum Säen deren Sämaschine während des Transportes gut gehalten ist
Combined soil working and sowing machine with a sowing machine which holds well during transport

(30) Priorité: 19.07.1993 FR 9308990
(43) Date de publication de la demande: 25.01.1995
(73) Titulaire: KUHN S.A., F-67700 Saverne (FR)
(72) Inventeur: Oberle, Edmond, F-67700 Haegen (FR); Kobel, Richard, F-67590 Schweighouse-sur-Moder (FR)

(56) Documents cités:
- EP-A- 0 255 183
- EP-A- 0 340 539
- EP-A- 0 445 583
- DE-A- 3 807 206
- FR-A- 2 528 271

## Description

La présente invention concerne une machine combinée de travail du sol et de semis comportant :
- une machine agricole de préparation d'un lit de semence destinée à être liée à un véhicule moteur et comportant d'une part un châssis s'étendant transversalement à la direction de travail et d'autre part un rouleau de rappuyage s'appuyant sur le sol durant le travail;
   et
- un semoir lié à ladite machine agricole de préparation du lit de semence de telle manière qu'au moins une partie du poids dudit semoir agisse directement sur ledit rouleau de rappuyage durant le travail.

Dans le document **EP-0 340 539** est décrite une telle machine combinée de travail du sol et de semis. Celle-ci comporte une machine agricole de préparation d'un lit de semence et un semoir.

La machine agricole de préparation du lit de semence comporte d'une part un châssis s'étendant perpendiculairement à la direction de travail et d'autre part un rouleau de rappuyage s'appuyant sur le sol durant le travail. Le rouleau de rappuyage est lié au châssis à l'aide de deux bras de liaison. Etant donné que les bras de liaison sont articulés au châssis, ce dernier peut se déplacer en hauteur par rapport audit rouleau. Le châssis comporte en sus un dispositif de réglage limitant son déplacement, vers le bas, par rapport au rouleau, ce qui détermine la profondeur de travail des outils de travail du sol de ladite machine agricole de préparation du lit de semence. A l'inverse, au transport, lorsque la machine agricole de préparation du lit de semence est soulevée au moyen du dispositif de relevage du tracteur, le déplacement du rouleau vers le bas par rapport au châssis est limité par deux butées latérales de transport.

Le semoir, quant à lui, est attelé à l'arrière du châssis de la machine agricole de préparation du lit de semence au moyen d'un cadre à trois points et de bielles d'attelage centrales. Au travail, le semoir repose sur le rouleau et les bielles d'attelage centrales permettent au châssis de la machine agricole de préparation du lit de semence de se déplacer en hauteur par rapport au rouleau et au semoir. De cette sorte, le poids du semoir participe favorablement au rappuyage du sol réalisé par le rouleau sans pour autant gêner le déplacement, vers le haut, du châssis de la machine agricole de préparation du lit de semence lorsque les outils de travail du sol de celle-ci rencontrent un obstacle enfoui dans le sol. Entre le cadre trois points du semoir et le châssis de la machine agricole de préparation du lit de semence s'étendent, par ailleurs, deux chaînes servant à limiter le déplacement du semoir vers le bas lors du relevage de la machine combinée de travail du sol et de semis. Lors du relevage de celle-ci, c'est tout d'abord le châssis de la machine agricole de préparation du lit de semence qui est levé, puis le semoir dès que les chaînes de limitation sont tendues, et finalement le rouleau de rappuyage lorsque ses bras de liaison arrivent en contact avec les butées latérales.

Cette machine combinée de travail du sol et de semis connue présente l'inconvénient, au transport, d'avoir le semoir uniquement lié à la partie centrale du châssis de sa machine agricole de préparation du lit de semence. De ce fait, ledit semoir est relativement mal tenu au transport. En effet, lorsque le tracteur roule sur un terrain accidenté, le semoir risque de se balancer avec une grande amplitude autour d'un axe géométrique dirigé parallèlement à la direction de transport. Ceci sollicite alors fortement l'attelage du semoir et la partie centrale du châssis de la machine agricole de préparation du lit de semence.

Dans le document **EP-A-0 445 583** est également décrite une telle machine combinée de travail du sol et de semis comportant une herse rotative et un semoir.

La herse rotative présente une poutre formant châssis et s'étendant transversalement à la direction de travail. Cette poutre comporte en outre un portique au moyen duquel ladite poutre peut être liée à un tracteur.

Un châssis supplémentaire, réalisé sous forme de tube carré, est fixé à des parois latérales lesquelles sont liées à la poutre au moyen de barres supérieures et de barres inférieures formant un parallélogramme, un couple de barres s'étendant à chaque extrémité de la poutre. Ces parois latérales portent, à leurs extrémités supérieures, le semoir.

La machine combinée de travail du sol et de semis comporte en sus un rouleau qui est lié au châssis supplémentaire.

Durant le travail, le poids du semoir repose essentiellement sur le rouleau. En outre, la herse rotative peut se déplacer en hauteur par rapport à l'ensemble semoir - rouleau car cet ensemble est lié à la herse rotative par un parallélogramme déformable.

A l'inverse, au transport, lorsque la machine combinée de travail du sol et de semis est soulevée au moyen du dispositif de relevage du tracteur, le déplacement de l'ensemble semoir - rouleau, vers le bas, par rapport à la herse rotative, est forcément limité par deux butées qui agissent sans équivoque sur le parallélogramme déformable.

Dans ce concept, le poids de l'ensemble semoir - rouleau repose, durant le transport, sur les deux extrémités de la poutre de la herse rotative. Ceci sollicite fortement cette poutre durant le transport.

Dans le document **FR-A- 2 528 271** est aussi décrite une machine combinée de travail du sol et de semis constituée d'une machine agricole de préparation d'un lit de semence et d'un semoir.

La machine agricole de préparation du lit de semence comporte d'une part un châssis s'étendant orthogonalement à la direction de travail et d'autre part un rouleau de rappuyage s'appuyant sur le sol durant le travail. Le rouleau de rappuyage est lié audit châssis à l'aide de bras de liaison.

Le semoir, quant à lui, est attelé à l'arrière du châssis de la machine agricole de préparation du lit de semence au moyen de pièces d'accouplement constituant un bâti de levage. Celui-ci comprend deux points d'attelage inférieurs et un troisième point d'attelage supérieur. Un vérin hydraulique, raccordé au système hydraulique du tracteur par une conduite, est destiné à faire tourner le bâti de levage dans le plan vertical. Par cette manoeuvre, le semoir qui est attelé au bâti de levage, peut être déplacé, à partir de sa position de travail, vers l'avant et vers le haut, dans la position de transport. Au travail, le semoir repose sur le sol au moyen de ses roues.

Dans les zones extérieures du châssis de la machine agricole de préparation du lit de semence, sont prévues des butées qui sont constituées chacune par une plaque de tôle portant à son extrémité supérieure un appui réglable dans la direction de déplacement. Lorsque le semoir est déplacé en position de transport, comme expliqué plus haut, à l'aide du vérin hydraulique, les roues du semoir s'appliquent, en fin de course, contre leur appui respectif. Chaque appui agit alors sensiblement au niveau du plan horizontal contenant l'axe de la roue correspondante.

Il est recherché, grâce à ce dispositif, d'éliminer, lors du transport, les oscillations du semoir autour d'un axe vertical (lacet), mais pas autour d'un axe géométrique dirigé parallèlement à la direction de déplacement (roulis).

Le but de la présente invention est de créer une machine combinée de travail du sol et de semis dont le semoir est mieux tenu au transport et qui conserve l'avantage, durant le travail, de la sollicitation directe du rouleau de rappuyage par une partie au moins du poids dudit semoir.

A cet effet, la machine combinée de travail du sol et de semis selon l'invention est remarquable en ce qu'au transport le semoir repose
* sur la partie centrale du châssis de la machine agricole de préparation du lit de semence à l'aide d'au moins une butée centrale, et
* en sus partiellement sur ledit châssis au moyen d'au moins deux butées latérales respectivement situées de part et d'autre en delà de la (des) butées(s) centrale(s), de préférence au moins sensiblement dans le voisinage de chaque extrémité longitudinale dudit châssis.

Etant donné qu'au transport le semoir repose en sus partiellement sur le châssis au moyen d'au moins deux butées latérales respectivement situées de part et d'autre en delà de la (des) butées centrale(s), le semoir ne risque plus de se balancer autour d'un axe géométrique dirigé parallèlement à la direction de transport. L'attelage du semoir et la partie centrale du châssis de la machine agricole de préparation du lit de semence sont, de ce fait, moins sollicités durant le transport.

Comme le semoir repose durant le transport à la fois sur la partie centrale du châssis et en delà de celle-ci, on obtient une bonne répartition du poids du semoir sur le châssis. Toutefois, les charges reportées en delà de la partie centrale du châssis resteront de préférence limitées.

Selon une autre caractéristique de l'invention, la répartition entre le poids soutenu par la (les) butée(s) centrale(s) et le poids soutenu par les butées latérales peut être réglée à volonté grâce à au moins un dispositif de réglage adéquat.

Un réglage très précis de cette répartition peut être obtenu lorsque ledit dispositif de réglage comporte un dispositif à réglage continu, du type à vis et écrou par exemple.

Selon une autre caractéristique de l'invention, il peut être prévu que le rouleau de rappuyage soit lié au châssis au moyen de dispositifs de liaison et que chaque dispositif de liaison s'appuie, durant le transport, sur la butée latérale respective dudit châssis.

Avantageusement, ces dispositifs de liaison seront tels que le châssis de la machine agricole de préparation du lit de semence puisse, durant le travail, se déplacer en hauteur lorsque les outils de celle-ci rencontrent un obstacle enfoui dans le sol.

Chaque dispositif de liaison pourra être avantageusement constitué d'un bras de liaison lié à son extrémité frontale au châssis au moyen d'une articulation d'axe de pivotement dirigé au moins sensiblement horizontalement et perpendiculairement à la direction de travail.

Selon une autre caractéristique de l'invention, il peut être prévu que le semoir comporte un bâti supportant la trémie dudit semoir et lié au châssis de la machine agricole de préparation du lit de semence au moyen d'une structure de guidage autorisant, durant le travail, un déplacement, vers le haut, dudit châssis par rapport audit bâti. De cette sorte, le semoir ne gêne pas non plus le déplacement en hauteur du châssis de la machine agricole de préparation du lit de semence lorsque les outils de travail du sol de celle-ci rencontrent un obstacle enfoui dans le sol.

Cette structure de guidage peut avantageusement comporter au moins une bielle s'étendant directement ou indirectement entre le bâti et le châssis.

Selon une autre caractéristique de l'invention, il peut être prévu que le bâti s'appuie sur chaque dispositif de liaison durant le travail et durant le transport à l'aide d'une liaison extérieure correspondante comportant deux surfaces de contact.

En vue latérale, chacune de ces liaisons extérieures s'étend de préférence au moins sensiblement à la verticale de l'axe de rotation du rouleau de rappuyage. De ce fait, au moins sensiblement tout le poids du semoir repose sur le rouleau de rappuyage.

Dans une réalisation particulière, chaque liaison extérieure peut comporter un galet réduisant les efforts de frottement entre le bâti et ledit dispositif de liaison lorsque le châssis se déplace en hauteur par rapport au semoir.

Dans une autre réalisation particulière, différente de la précédente, chaque liaison extérieure peut comporter une articulation cylindrique d'axe de pivotement au moins sensiblement parallèle à l'axe de rotation du rouleau de rappuyage. Dans cette autre réalisation particulière, les dispositifs de liaison du rouleau de rappuyage participent ainsi au guidage du semoir par rapport au châssis.

Chacune de ces articulations cylindriques pourra être constituée par un tourillon reposant dans des organes de centrage et maintenu en place par des organes de verrouillage. Dans une solution avantageuse, ledit tourillon peut être fixé sur le bâti du semoir, tandis que les organes de centrage seront prévus sur le dispositif de liaison correspondant du rouleau de rappuyage. En vue latérale, lesdits organes de centrage pourront avoir une forme de "V" ouvert vers le haut. Les organes de verrouillage, quant à eux, pourront comporter un support de guidage amovible destiné à coiffer le tourillon correspondant de sorte à empêcher ledit tourillon de sortir des organes de centrage, tout en autorisant la rotation de celui-ci.

Quelle que soit la réalisation, il peut également être prévu que chaque liaison extérieure comporte des organes de positionnement destinés à positionner le bâti par rapport aux dispositifs de liaison lors du montage du semoir sur la machine agricole de préparation du lit de semence.

Par ailleurs, il peut également être avantageusement prévu que chaque liaison extérieure comporte des organes de maintien latéraux destinés à maintenir, transversalement à la direction d'avance, le bâti par rapport aux dispositifs de liaison.

Selon une autre caractéristique de l'invention, le bâti peut avantageusement comporter une structure centrale destinée à être liée au châssis de la machine agricole de préparation du lit de semence et deux structures latérales fixées à ladite structure centrale.

Chaque structure latérale peut comporter au moins un longeron latéral s'étendant depuis la structure centrale vers l'extérieur et vers le bas jusque dans le voisinage du dispositif de liaison correspondant.

Chaque structure latérale peut également être fixée de manière amovible à la structure centrale. Ceci permet notamment à l'utilisateur, s'il le souhaite, de fixer le semoir uniquement sur le châssis de la machine agricole de préparation du lit de semence en démontant lesdites structures latérales et en verrouillant la structure de guidage par rapport audit châssis.

Selon une autre caractéristique de l'invention, il peut être prévu que la structure de guidage comporte, en outre, un dispositif de liaison rapide destiné à être lié à un dispositif de liaison complémentaire de la structure centrale du bâti. Un tel agencement permet d'atteler et de déposer aisément le semoir. De plus, il pourra être prévu que le dispositif de liaison rapide soit destiné à venir en contact avec la (les) butée(s) centrale(s) lors de la mise de la machine combinée de travail du sol et de semis dans sa position de transport.

D'autres caractéristiques de l'invention apparaissent dans la description suivante de quatre exemples non limitatifs de réalisation faite en référence au dessin annexé sur lequel :
- La figure 1 représente une vue latérale d'une première machine combinée de travail du sol et de semis selon l'invention attelée à un véhicule moteur et placée dans sa position de transport ;
- La figure 2 représente une vue arrière d'une partie de la première machine combinée de travail du sol et de semis ;
- La figure 3 représente une vue latérale d'une partie d'une deuxième machine combinée de travail du sol et de semis selon l'invention ;
- La figure 4 représente une vue arrière de ladite partie de la deuxième machine combinée de travail du sol et de semis ;
- La figure 5 représente une vue latérale d'une troisième machine combinée de travail du sol et de semis selon l'invention attelée à un véhicule moteur et placée dans sa position de transport ;
- La figure 6 représente une vue latérale agrandie d'une partie de la troisième machine combinée de travail du sol et de semis ;
- La figure 7 représente une vue arrière d'une partie de la troisième machine combinée de travail du sol et de semis ;
   et
- La figure 8 représente une vue arrière d'une partie d'une quatrième machine combinée de travail du sol et de semis selon l'invention.

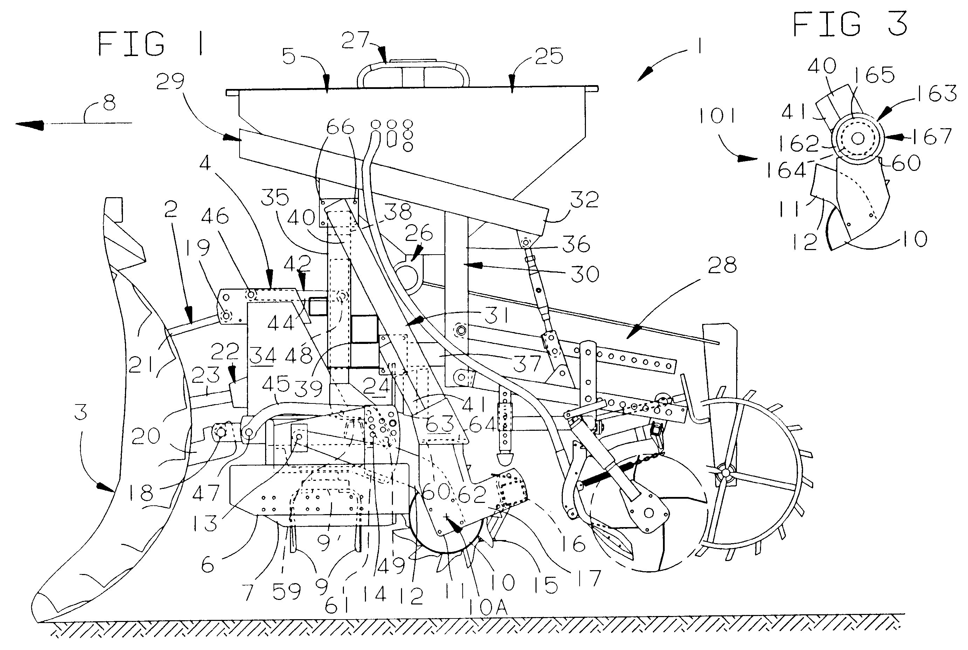

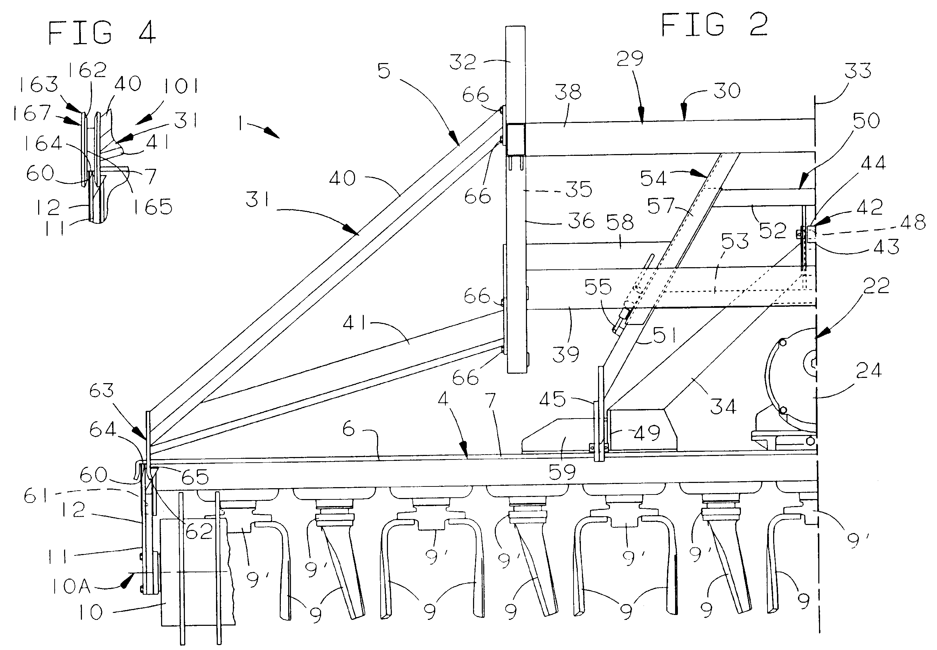

Sur les figures 1 et 2 apparaît une première machine agricole combinée de travail du sol et de semis (1) liée à l'attelage arrière (2) d'un tracteur agricole (3). Celle-ci comprend une machine agricole de préparation d'un lit de semence (4) et un semoir (5).

La machine de préparation du lit de semence (4) comporte un châssis (6) comprenant une poutre support (7) qui s'étend transversalement à la direction de travail (8). Sous la poutre support (7) s'étendent des outils de travail du sol (9) liés à des rotors (9') qui sont guidés en rotation dans la poutre support (7) de sorte à pouvoir tourner autour d'axes respectifs dirigés vers le haut.

La machine de préparation du lit de semence (4) est également équipée d'un rouleau de rappuyage (10) implanté derrière lesdits rotors (9') de sorte que son axe de rotation (10A) s'étende au moins sensiblement orthogonalement à la direction de travail (8). Ce rouleau de rappuyage (10), du type "Packer" dans l'exemple représenté, est guidé en rotation entre les extrémités arrière de deux dispositifs de liaison (11). Dans cet exemple, chaque dispositif de liaison (11) comporte un bras de liaison (12) lié à son extrémité frontale au châssis (6) ou plus exactement à la poutre support (7) de celui-ci, au moyen d'une articulation (13) d'axe s'étendant au moins sensiblement parallèlement à l'axe de rotation (10A) du rouleau de rappuyage (10). Entre chacun de ces dispositifs de liaison (11) et le châssis (6) est prévu un dispositif de réglage (14) de la profondeur de travail des outils de travail du sol (9). Grâce à ces deux dispositifs de réglage (14) de la profondeur de travail, il est possible de régler la position en hauteur du rouleau de rappuyage (10) par rapport au châssis (6). Au travail, le rouleau de rappuyage (10) roule en s'appuyant sur le sol et détermine ainsi la profondeur de travail des outils de travail du sol (9). En sus, le rouleau de rappuyage (10) participe au travail du sol.

Au travail, les dispositifs de réglage (14) de la profondeur de travail limitent le déplacement de ladite poutre support (7) par rapport au rouleau de rappuyage (10) uniquement vers le bas. Grâce à cette caractéristique, la poutre support (7) de la machine de préparation du lit de semence (4) peut se déplacer provisoirement vers le haut lorsque les outils de travail du sol (9) rencontrent un obstacle enfoui dans le sol alors que le rouleau de rappuyage (10) continue à rouler sur le sol.

Le nettoyage du rouleau de rappuyage (10) est réalisé à l'aide d'une pluralité d'outils de nettoyage (15) fixés à un longeron support (16). Ce longeron support (16) s'étend au moins sensiblement parallèlement au rouleau de rappuyage (10) et est lié rigidement à chaque bras de liaison (12) dudit rouleau de rappuyage (10) au moyen d'une paroi latérale (17) correspondante. Celle-ci est fixée au bras de liaison (12) dans le voisinage de l'axe de rotation (10A) du rouleau de rappuyage (10) et assure un positionnement précis des outils de nettoyage (15) par rapport audit rouleau de rappuyage (10).

Le châssis (6) comporte par ailleurs deux points d'attelage inférieurs (18) et un point d'attelage supérieur (19) prévus pour l'accouplement de la machine combinée de travail du sol et de semis (1) à l'attelage trois points arrière (2) du tracteur agricole (3) (sur la figure 1, on n'a représenté que les barres (20, 21) dudit attelage (2)).

L'entraînement en rotation des outils de travail du sol (9) est réalisé par des moyens d'entraînement (22) recevant eux-mêmes le mouvement de l'arbre de prise de force (non représenté) du tracteur agricole (3) au moyen d'un arbre de transmission à joints universels (23). Ces moyens d'entraînement (22) sont connus de l'homme de l'art et comportent notamment un carter central de renvoi (24) qui pourra avantageusement être réalisé sous forme de boîte de vitesses. Il comporte d'une part un arbre de sortie (non représenté) pénétrant dans la poutre support (7) pour entraîner de manière connue les rotors (9') et les outils de travail du sol (9) équipant ces derniers, et d'autre part un arbre de sortie arrière (non représenté) servant à entraîner le semoir (5) via des organes d'entraînement non représentés mais également connus de l'homme de l'art.

Le semoir (5), quant à lui, comporte une trémie (25) dans laquelle se trouve la semence à implanter dans le lit de semence préparé par la machine de préparation du lit de semence (4). A la base de la trémie (25) est prévu un dispositif (26) de dosage de la semence à la sortie duquel la semence est transportée par un dispositif (27) de distribution et de véhiculage jusqu'à un dispositif (28) d'implantation de la semence dans le sol. Tous ces éléments (25, 26, 27, 28) sont connus de l'homme de l'art et ne seront de ce fait pas décrits ici.

Le semoir (5) comporte par ailleurs un bâti (29) qui se compose d'une structure centrale (30) et de deux structures latérales (31) liées chacune à la structure centrale (30) de manière amovible à l'aide de vis de fixation (66).

La structure centrale (30) porte la trémie (25) au moyen de deux longerons porteurs (32) s'étendant vers l'arrière et vers le bas. Ces deux longerons porteurs (32) s'étendent au moins sensiblement symétriquement de part et d'autre d'un plan vertical médian de symétrie (33) de la machine combinée de travail du sol et de semis (1). Ce plan de symétrie (33) s'étend suivant la direction de travail (8) et contient au moins sensiblement le point d'attelage supérieur (19) du châssis (6). Les deux longerons porteurs (32) s'étendent en sus au-dessus de la partie centrale (34) du châssis (6) et de la partie centrale du rouleau de rappuyage (10). Chaque longeron porteur (32) est soutenu par deux poutres de soutien (35, 36) liées entre elles dans le voisinage de leur extrémité inférieure à l'aide d'une traverse latérale (37) respective servant à rigidifier les poutres de soutien (35, 36). Du reste, entre les deux poutres de soutien frontales (35) sont implantées deux traverses frontales (38, 39) dont l'une (38) s'étend dans le voisinage de l'extrémité supérieure desdites poutres de soutien frontales (35) et dont l'autre (39) s'étend dans le voisinage de l'extrémité inférieure de ces dernières.

Chaque structure latérale (31) du bâti (29) s'étend entre la structure centrale (30) et le dispositif de liaison (11) correspondant du rouleau de rappuyage (10). Chaque structure latérale (31) comporte à cet effet deux longerons latéraux (40, 41) liés entre eux dans le voisinage du dispositif de liaison (11) et fixés à la structure centrale (30) dans le voisinage du longeron porteur (32) correspondant en ce qui concerne le longeron latéral (40) et dans le voisinage de la traverse latérale (37) respective en ce qui concerne le longeron latéral (41). Dans l'exemple représenté, l'un (40) des deux longerons latéraux (40, 41) est fixé à la poutre de soutien frontale (35) correspondante et l'autre (41) est fixé à la traverse latérale (37) respective. Grâce à cet agencement, le poids du semoir (5) repose, durant le travail, uniquement sur les dispositifs de liaison (11) du rouleau de rappuyage (10), c'est-à-dire que tout le poids du semoir (5) plaque le rouleau de rappuyage (10) sur le sol. Le lit de semence est, de ce fait, mieux fini.

La structure centrale (30) du bâti (29) est liée au châssis (6) de la machine de préparation du lit de semence (4) au moyen d'une structure de guidage (42). Celle-ci autorise, durant le travail, un déplacement, vers le haut, du châssis (6) par rapport audit bâti (29). Etant donné que le poids du semoir (5) repose durant le travail, entièrement sur le rouleau de rappuyage (10), le châssis (6) de la machine de préparation du lit de semence (4) peut donc se déplacer plus facilement vers le haut pour permettre aux outils de travail du sol (9) de passer par-dessus un obstacle enfoui dans le sol.

La structure de guidage (42) comporte, en vue latérale, un quadrilatère (43) déformable verticalement. Celui-ci se compose d'une bielle supérieure (44) et de deux bielles inférieures (45). Ces bielles (44, 45) sont liées chacune au châssis (6) dans le voisinage des points d'attelage (19, 18) au moyen d'une articulation (46, 47) respective et s'étendent vers l'arrière au moins sensiblement parallèlement à la direction de travail (8). A leur extrémité arrière, les bielles (44, 45) du quadrilatère déformable (43) sont liées chacune à un dispositif de liaison rapide (50) de la structure de guidage (42) à l'aide d'une articulation (48, 49) respective. Dans l'exemple représenté, le quadrilatère déformable (43) est un trapèze, mais celui-ci pourrait également être d'une forme différente : un parallélogramme par exemple.

Ledit dispositif de liaison rapide (50) comporte deux poutrelles de centrage (51) et deux traverses rigidifiantes (52, 53). Chaque poutrelle de centrage (51) est liée à son extrémité inférieure à la bielle inférieure (45) correspondante au moyen de l'articulation (49) respective et s'étend vers le haut et vers le plan médian (33). Les deux traverses rigidifiantes (52, 53), quant à elles, s'étendent au moins sensiblement horizontalement entre les deux poutrelles de centrage (51) et sont liées, dans le voisinage du plan médian (33), à la bielle supérieure (44) à l'aide de l'articulation (48).

Le dispositif de liaison rapide (50) de la structure de guidage (42) est destiné à être fixé à un dispositif de liaison complémentaire (54) de la structure centrale (30) du bâti (29). Ce dispositif de liaison complémentaire (54) comporte, à cet effet, deux organes de guidage (57) destinés à venir coiffer les deux poutrelles de centrage (51) dudit dispositif de liaison rapide (50) et à être verrouillés avec celles-ci à l'aide d'un dispositif de verrouillage rapide (55) connu de l'homme de l'art. Chaque organe de guidage (57) est fixé rigidement à son extrémité supérieure à la traverse frontale supérieure (38) et est lié dans le voisinage de son extrémité inférieure directement à la traverse frontale inférieure (39) et à la poutre de soutien frontale (35) correspondante au moyen d'une poutrelle rigidifiante (58) respective. Grâce à un tel agencement, le dispositif de liaison complémentaire (54) est solidement lié au reste du bâti (29) du semoir (5). Cela permet un attelage rigide de la structure centrale (30) du semoir (5) à la structure de guidage (42) de la machine de préparation du lit de semence (4) tout en autorisant une dépose aisée du semoir (5).

Au transport, le semoir (5) s'appuie notamment sur la partie centrale (34) du châssis (6) grâce à au moins une butée centrale (59). Dans l'exemple représenté, il est prévu deux butées centrales (59) dont chacune s'étend dans le voisinage de l'extrémité inférieure d'une poutrelle de centrage (51) correspondante du dispositif de liaison rapide (50). Grâce à ces deux butées centrales (59), une partie du poids du semoir (5) est directement supportée par la partie centrale (34) du châssis (6) de la machine de préparation du lit de semence (4) lors du relevage de celle-ci.

L'autre partie du poids du semoir (5) est supportée par les extrémités longitudinales du châssis (6) par l'intermédiaire des dispositifs de liaison (11) du rouleau de rappuyage (10). En effet, chaque structure latérale (31) du semoir (5) repose via une liaison extérieure (63) sur le dispositif de liaison (11) correspondant et le déplacement de chaque dispositif de liaison (11) est limité vers le bas au moyen d'une butée latérale (61) respective. Au transport, le semoir (5) ne risque ainsi pas de se balancer autour d'un axe géométrique dirigé suivant la direction de transport (8). La structure centrale (30) du bâti (29) du semoir (5) et la structure de guidage (42) sont, du reste, moins sollicitées durant le transport. On notera que l'appui du semoir (5) sur les deux butées centrales (59) et sur les deux butées latérales (61) est notamment favorisé par l'élasticité des structures latérales (31) du bâti (29) et/ou la légère flexion du châssis (6) et plus exactement de la poutre support (7) de celui-ci.

Chaque liaison extérieure (63) présente deux surfaces de contact (60, 64). La surface de contact (64) de la structure latérale (31) est au moins sensiblement horizontale, tandis que la surface de contact (60) du dispositif de liaison (11) correspondant est courbe (convexe) ; son axe de courbure est au moins sensiblement confondu avec l'axe de rotation (10A) du rouleau de rappuyage (10). En outre, des organes de positionnement (62) implantés de part et d'autre des surfaces de contact (60, 64) positionnent le bâti (29) par rapport aux dispositifs de liaison (11). Tel que visible sur la figure 2, ces organes de positionnement (62) sont fixés au bâti (29) et présentent une forme en "V" ouvert vers le bas, qui coiffe le dispositif de guidage (11) respectif. Ces organes de positionnement (62) garantissent une mise en position rapide du bâti (29) par rapport aux dispositifs de liaison (11) lors du montage du semoir (5) sur la machine de préparation du lit de semence (4).

Chaque liaison extérieure (63) comporte en sus des organes de maintien latéraux (65). Ces organes de maintien latéraux (65) sont implantés de part et d'autre de chaque surface de contact (64) de la structure latérale (31) afin de maintenir, transversalement à la direction de travail (8), le bâti (29) par rapport aux dispositifs de liaison (11). Tel que visible sur la figure 2, les organes de positionnement (62) décrits plus haut sont avantageusement implantés aux extrémités inférieures de ces organes de maintien latéraux (65).

Cette machine combinée de travail du sol et de semis (1) selon l'invention fonctionne de la manière suivante.

Au travail, ladite machine combinée (1) s'appuie sur le sol au moyen du rouleau de rappuyage (10) qui définit la profondeur de travail des outils de travail (9). Les outils de travail (9) sont entraînés en rotation à partir du tracteur (3) auquel est attelée ladite machine combinée (1) et qui la déplace suivant le sens d'avance (8) au travail. Etant donné que le poids du châssis (6) de la machine de préparation du lit de semence (4) et le poids du semoir (5) agissent sur le rouleau de rappuyage (10), le lit de semence est bien rappuyé.

Compte tenu du fait qu'au travail le semoir (5) s'étend, en vue latérale, au moins sensiblement à la verticale de l'axe de rotation (10A) du rouleau de rappuyage (10), le poids dudit semoir (5) est pratiquement uniquement supporté par le rouleau de rappuyage (10). Ce faisant, le poids du semoir (5) participe favorablement au rappuyage du sol sans pour autant gêner le déplacement du châssis (6) de la machine de préparation du lit de semence (4) vers le haut lorsque les outils de travail du sol (9) de celle-ci rencontrent un obstacle enfoui dans le sol. En effet, étant donné que durant le travail le semoir (5) est éloigné des butées centrales (59) du châssis (6) et que les dispositifs de liaison (11) ne sont pas en contact avec les butées latérales (61), le châssis (6) de la machine de préparation du lit de semence (4) peut se déplacer en hauteur par rapport au rouleau de rappuyage (10) à l'aide des dispositifs de liaison (11) et par rapport au semoir (5) grâce à la structure de guidage (42).

La mise de la machine combinée de travail du sol et de semis (1) dans la position de transport s'effectue par relevage de l'attelage arrière (2) du tracteur (3). Ce faisant, il y a d'abord soulèvement du châssis (6) de la machine de préparation du lit de semence (4) puis soulèvement simultané du semoir (5) et du rouleau de rappuyage (10). Juste avant le soulèvement simultané du semoir (5) et du rouleau de rappuyage (10), ledit semoir (5) vient reposer sur les butées centrales (59) du châssis (6). Ce faisant, une partie de son poids qui précédemment reposait sur les dispositifs de liaison (11) via les structures latérales (31), est transférée sur les butées centrales (59) du châssis (6). Parallèlement, le poids qui repose sur les dispositifs de liaison (11) du rouleau de rappuyage (10) via les structures latérales (31) diminue. De cette sorte, les déformations élastiques des structures latérales (31) - dues principalement au poids de la structure centrale (30) et au poids de la trémie (25) - diminuent. Bien évidemment, les butées latérales (61) arrivent en contact avec les dispositifs de liaison (11) (ce qui a alors pour effet de soulever le rouleau de rappuyage (10) et le semoir (5) conjointement avec la machine de préparation du lit de semence (4)) avant que tout le poids du semoir (5) ne soit entièrement transféré sur les butées centrales (59). Au transport, le semoir (5) repose ainsi à la fois sur les butées centrales (59) et sur les butées latérales (61) du châssis (6).

En outre, on peut remarquer que le contact entre les surfaces de contact (60, 64) des liaisons extérieures (63) n'a pas été rompu lors du soulèvement de la machine combinée de travail du sol et de semis (1).

Les figures 3 et 4 montrent un deuxième exemple de réalisation d'une machine combinée de travail du sol et de semis (101) selon l'invention. Celle-ci comporte les mêmes moyens que la machine combinée de travail du sol et de semis (1) précédente, à l'exception des liaisons extérieures. En effet, cette deuxième machine combinée de travail du sol et de semis (101) comporte des liaisons extérieures (163) munies chacune d'un galet (167). Chaque galet (167) est guidé en rotation dans la structure latérale (31) correspondante et comporte une surface de contact (164) destinée à rouler sur la surface de contact (60) du dispositif de liaison (11) respectif. Il en découle que les efforts de frottement entre lesdites surfaces de contact (60, 164) sont réduits lorsque le châssis (6) se déplace en hauteur par rapport au semoir (5) et au rouleau de rappuyage (10).

Chaque galet (167) comporte des organes de maintien latéraux (165) et des organes de positionnement (162) dont les fonctions sont identiques à celles des organes de maintien latéraux (65) et des organes de positionnement (62) de la machine combinée de travail du sol et de semis (1) précédemment décrite.

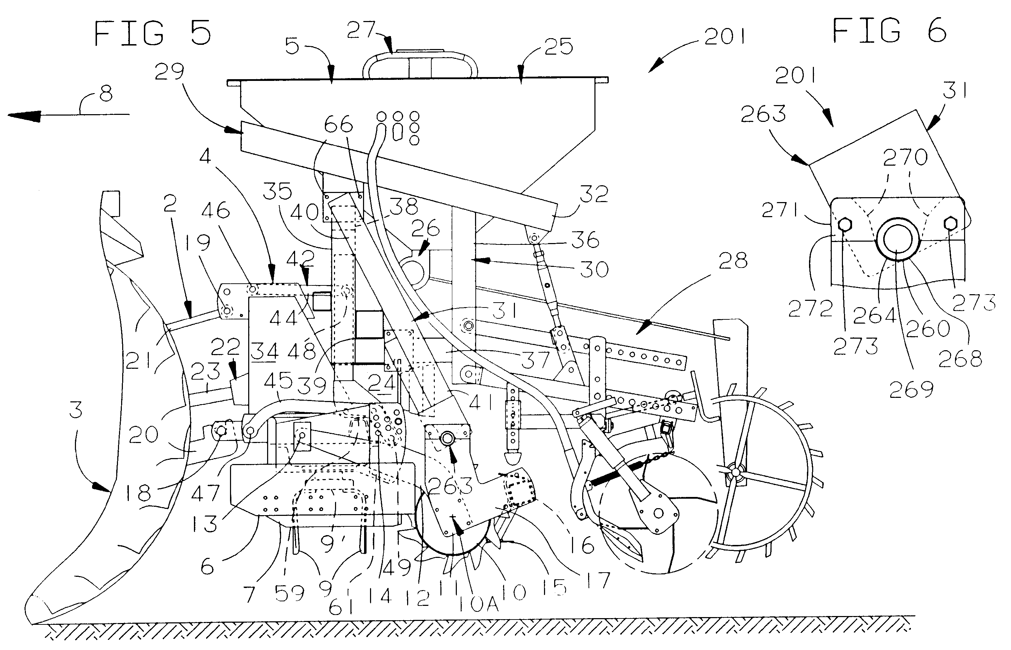

Les figures 5 à 7 montrent un troisième exemple de réalisation d'une machine combinée de travail du sol et de semis (201) selon l'invention. Celle-ci comporte les mêmes moyens que la première machine combinée de travail du sol et de semis (1) décrite précédemment, à l'exception des liaisons extérieures. En effet, cette troisième machine combinée de travail du sol et de semis (201) comporte des liaisons extérieures (263), liées chacune au dispositif de liaison (11) correspondant au moyen d'une articulation cylindrique (268) d'axe de pivotement au moins sensiblement parallèle à l'axe de rotation (10A) du rouleau de rappuyage (10) (on comprendra que les axes de pivotement des deux articulations cylindriques (268) sont au moins sensiblement confondus). Chaque articulation cylindrique (268) comporte les surfaces de contact (260, 264) du dispositif de liaison (11) et de la structure latérale (31) respectifs et s'étend, au travail, au moins sensiblement à la même hauteur que l'articulation (13) liant le dispositif de liaison (11) correspondant au châssis (6). De plus, les articulations (46, 48) de la bielle supérieure (44) et les articulations (13, 268) des bras de liaison (12) des dispositifs de liaison (11) forment, en vue latérale, au moins sensiblement un trapèze dont les côtés parallèles sont constitués de la bielle supérieure (44) et des bras de liaison (12).

Ce trapèze suffit, à lui seul, à guider le semoir (5) en hauteur par rapport à la machine de préparation du lit de semence (4). Les bielles inférieures (45) servent, dans cet exemple de réalisation, à rigidifier la liaison du dispositif de liaison rapide (50) au châssis (6) de la machine de préparation du lit de semence (4) de sorte à éviter un certain balancement du semoir (5). A cet égard, il faut noter que la distance entre les articulations (47, 49) de chaque bielle inférieure (45) et la distance entre les articulations (13, 268) de chaque bras de liaison (12) sont au moins sensiblement identiques. De plus, toutes ces articulations (47, 49, 13, 268) s'étendent au moins sensiblement à la même hauteur.

On comprendra bien évidemment que le quadrilatère déformable constitué par les articulations (46, 48, 13, 268) pourrait également être d'une forme différente : un parallélogramme par exemple.

Chaque liaison extérieure (263) comporte en sus des organes de maintien latéraux (265) et des organes de positionnement (262) dont les fonctions sont identiques à celles des organes de maintien latéraux (65 ; 165) et des organes de positionnement (62 ; 162) des exemples précédemment décrits.

Par ailleurs, chaque liaison extérieure (263) comporte en particulier un tourillon (269), des organes de centrage (270) et des organes de verrouillage (271). Dans cet exemple de réalisation, le tourillon (269) est fixé à la structure latérale (31) correspondante et s'étend dans les organes de centrage (270) prévus sur le bras de liaison (12) correspondant. Les organes de centrage (270) présentent à cet effet, en vue latérale, une forme en "V" ouvert vers le haut permettant au tourillon (269) de se centrer automatiquement au fond desdits organes de centrage (270). Les organes de verrouillage (271), quant à eux, empêchent le tourillon (269) de sortir des organes de centrage (270) tout en autorisant la rotation du tourillon (269) dans le bras de liaison (12) correspondant. Pour ce faire, les organes de verrouillage (271) comportent un support de guidage (272) destiné à coiffer le tourillon (269) et des vis de liaison (273) liant, de manière amovible, ledit support de guidage (272) audit bras de liaison (12). On comprendra bien évidemment que chaque tourillon (269) ainsi que les organes de centrage (270) et les organes de verrouillage (271) correspondants constituent une articulation cylindrique (268).

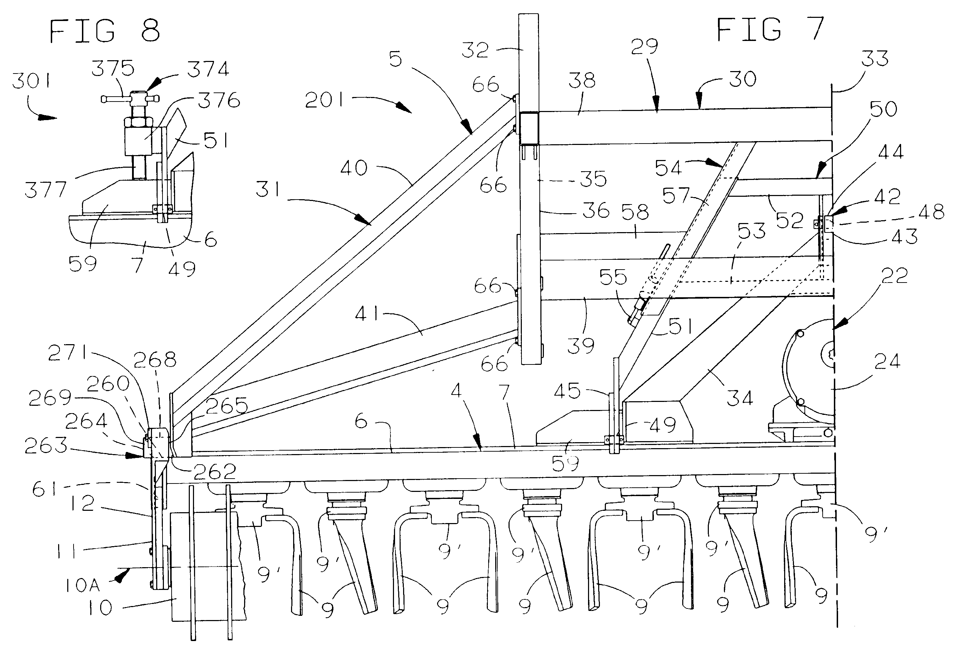

La figure 8 montre un quatrième exemple de réalisation d'une machine combinée de travail du sol et de semis (301) selon l'invention. Celle-ci peut comporter tous les moyens de l'une quelconque des machines combinées de travail du sol et de semis (1 ; 101 ; 201) prédécemment décrites. Elle comporte en sus au moins un dispositif de réglage (374) permettant de modifier la répartition du poids du semoir (5) entre les deux butées centrales (59) et les deux butées latérales (61). Dans l'exemple représenté, la machine combinée de travail du sol et de semis (301) comporte deux dispositifs de réglage (374) implantés dans le voisinage des butées centrales (59). Chaque dispositif de réglage (374) comporte un dispositif à réglage continu (375) du type à vis et écrou. Comme visible sur la figure 8, l'écrou (376) dudit dispositif de réglage (374) est lié à l'extrémité inférieure de la poutrelle de centrage (51) respective et la vis (377) peut venir s'appuyer sur la butée centrale (59) correspondante. De ce fait, en agissant sur les dispositifs de réglage (374), il est possible de répartir de manière optimale le poids du semoir (5) entre les butées centrales (59) et les butées latérales (61).

Finalement, différentes modifications restent possibles, notamment en ce qui concerne la constitution des divers éléments ou par substitution d'équivalents techniques, sans pour autant sortir du domaine de protection défini par les revendications.

## Revendications

1. Machine combinée de travail du sol et de semis (1 ; 101 ; 201 ; 301) comportant :
- une machine agricole de préparation d'un lit de semence (4) destinée à être liée à un véhicule moteur (3) et comportant d'une part un châssis (6) s'étendant transversalement à la direction de travail (8) et d'autre part un rouleau de rappuyage (10) s'appuyant sur le sol durant le travail;
et
- un semoir (5) lié à ladite machine agricole de préparation du lit de semence (4) de telle manière :
• que, durant le travail, au moins une partie du poids dudit semoir (5) agisse directement sur ledit rouleau de rappuyage (10);
• qu'au transport, ledit semoir (5) repose
* sur la partie centrale (34) dudit châssis (6) à l'aide d'au moins une butée centrale (59), et
* en sus partiellement sur ledit châssis (6) au moyen d'au moins deux butées latérales (61) respectivement situées de part et d'autre en delà de la (des) butée(s) centrale(s) (59), de préférence au moins sensiblement dans le voisinage de chaque extrémité longitudinale dudit châssis (6).

2. Machine combinée de travail du sol et de semis selon la revendication 1, caractérisée en ce qu'elle comporte au moins un dispositif de réglage (374) permettant de régler la répartition du poids du semoir (5) entre la (les) butée(s) centrale(s) (59) et les butées latérales (61).

3. Machine combinée de travail du sol et de semis selon la revendication 2, caractérisée en ce que ledit dispositif de réglage (374) comporte un dispositif à réglage continu (375), du type à vis (377) et écrou (376) par exemple.

4. Machine combinée de travail du sol et de semis selon une ou plusieurs des revendications 1 à 3, caractérisée en ce que le rouleau de rappuyage (10) est lié au châssis (6) au moyen de dispositifs de liaison (11) et que chaque dispositif de liaison (11) s'appuie, durant le transport, sur la butée latérale (61) respective dudit châssis (6).

5. Machine combinée de travail du sol et de semis selon la revendication 4, caractérisée en ce que chaque dispositif de liaison (11) s'étend près d'une extrémité longitudinale correspondante du châssis (6).

6. Machine combinée de travail du sol et de semis selon la revendication 4 ou 5, caractérisée en ce que le semoir (5) comporte un bâti (29) supportant la trémie (25) dudit semoir (5) et lié au châssis (6) au moyen d'une structure de guidage (42) autorisant, durant le travail, un déplacement vers le haut du châssis (6) par rapport audit bâti (29).

7. Machine combinée de travail du sol et de semis selon la revendication 6, caractérisée en ce que la structure de guidage (42) comporte au moins une bielle (44) s'étendant directement ou indirectement entre le bâti (29) et le châssis (6).

8. Machine combinée de travail du sol et de semis selon la revendication 6 ou 7, caractérisée en ce que le bâti (29) s'appuie sur chaque dispositif de liaison (11) durant le travail et durant le transport à l'aide d'une liaison extérieure (63 ; 163 ; 263) correspondante comportant deux surfaces de contact (60, 64 ; 60, 164 ; 260, 264).

9. Machine combinée de travail du sol et de semis selon la revendication 8, caractérisée en ce que, en vue latérale, chaque liaison extérieure (63 ; 163 ; 263) s'étend au moins sensiblement à la verticale de l'axe de rotation (10A) du rouleau de rappuyage (10).

10. Machine combinée de travail du sol et de semis selon la revendication 8 ou 9, caractérisée en ce que chaque liaison extérieure (163) comporte un galet (167) réduisant les efforts de frottement entre le bâti (29) et ledit dispositif de liaison (11) lorsque le châssis (6) se déplace en hauteur par rapport au semoir (5).

11. Machine combinée de travail du sol et de semis selon la revendication 8 ou 9, caractérisée en ce que chaque liaison extérieure (263) comporte une articulation cylindrique (268) d'axe de pivotement au moins sensiblement parallèle à l'axe de rotation (10A) du rouleau de rappuyage (10), les dispositifs de liaison (11) du rouleau de rappuyage (10) participant au guidage du semoir (5) par rapport au châssis (6).

12. Machine combinée de travail du sol et de semis selon la revendication 11, caractérisée en ce que chaque articulation cylindrique (268) est constituée d'un tourillon (269) reposant dans des organes de centrage (270) et maintenu en place par des organes de verrouillage (271).

13. Machine combinée de travail du sol et de semis selon la revendication 12, caractérisée en ce que ledit tourillon (269) est fixé sur le bâti (29) du semoir (5) et que les organes de centrage (270) sont prévus sur le dispositif de liaison (11) correspondant du rouleau de rappuyage (10).

14. Machine combinée de travail du sol et de semis selon la revendication 12 ou 13, caractérisée en ce que les organes de centrage (270) ont, en vue latérale, une forme en "V" ouvert vers le haut.

15. Machine combinée de travail du sol et de semis selon une ou plusieurs des revendications 12 à 15, caractérisée en ce que les organes de verrouillage (271) comportent un support de guidage (272) amovible destiné à coiffer le tourillon (269) correspondant de sorte à empêcher ledit tourillon (269) de sortir des organes de centrage (270), tout en autorisant la rotation de celui-ci.

16. Machine combinée de travail du sol et de semis selon une ou plusieurs des revendications 8 à 15, caractérisée en ce que chaque liaison extérieure (63 ; 163 ; 263) comporte des organes de positionnement (62 ; 162 ; 262) destinés à positionner le bâti (29) par rapport aux dispositifs de liaison (11) lors du montage du semoir (5) sur la machine agricole de préparation du lit de semence (4).

17. Machine combinée de travail du sol et de semis selon une ou plusieurs des revendications 8 à 16, caractérisée en ce que chaque liaison extérieure (63 ; 163 ; 263) comporte des organes de maintien latéraux (65; 165 ; 265) destinés à maintenir, transversalement à la direction d'avance (8), le bâti (29) par rapport aux dispositifs de liaison (11).

18. Machine combinée de travail du sol et de semis selon une ou plusieurs des revendications 6 à 17, caractérisée en ce que le bâti (29) comporte une structure centrale (30) destinée à être liée au châssis (6) de la machine agricole de préparation du lit de semence (4) et deux structures latérales (31) fixées à ladite structure centrale (30).

19. Machine combinée de travail du sol et de semis selon la revendication 18, caractérisée en ce que chaque structure latérale (31) comporte au moins un longeron latéral (40, 41) s'étendant depuis la structure centrale (30) vers l'extérieur et vers le bas jusque dans le voisinage du dispositif de liaison (11) correspondant.

20. Machine combinée de travail du sol et de semis selon la revendication 18 ou 19, caractérisée en ce que chaque structure latérale (31) est fixée de manière amovible à la structure centrale (30).

21. Machine combinée de travail du sol et de semis selon une ou plusieurs des revendications 6 à 20, caractérisée en ce que la structure de guidage (42) comporte un dispositif de liaison rapide (50) destiné à être lié à un dispositif de liaison complémentaire (54) de la structure centrale (30) du bâti (29).

22. Machine combinée de travail du sol et de semis selon la revendication 21, caractérisée en ce que le dispositif de liaison rapide (50) est destiné à venir en contact avec la (les) butée(s) centrale(s) (59) lors de sa mise dans la position de transport.

## Claims

1. Combined soil-working and seeding machine (1: 101; 201; 301) including:
- an agricultural machine for preparing a seed bed (4), intended to be connected to a motor vehicle (3) and including, on the one hand, a chassis (6) extending transversely to the direction of work (8) and, on the other hand, a press roller (10) which rests on the ground during work; and
- a seeder (5) connected to the said agricultural machine for preparing the seed bed (4) in such a way:
• that, during work, at least some of the weight of the said seeder (5) acts directly on the said press roller (10);
• that, during transport, the said seeder (5) rests
* on the central part (34) of the said chassis (6) via at least one central stop (59), and
* additionally partially on the said chassis (6) by means of at least two lateral stops (61) located respectively on each side of and beyond the central stop(s) (59), preferably at least approximately near each longitudinal end of the said chassis (6).

2. Combined soil-working and seeding machine according to Claim 1, characterized in that it includes at least one adjusting device (374) for adjusting the distribution of the weight of the seeder (5) between the central stop(s) (59) and the lateral stops (61).

3. Combined soil-working and seeding machine according to Claim 2, characterized in that the said adjusting device (374) includes a continuous-adjustment device (375) of the type comprising screw (377) and nut (376), for example.

4. Combined soil-working and seeding machine according to one or more of Claims 1 to 3, characterized in that the press roller (10) is connected to the chassis (6) by means of connecting devices (11) and that each connecting device (11) rests, during transport, on the respective lateral stop (61) of the said chassis (6).

5. Combined soil-working and seeding machine according to Claim 4, characterized in that each connecting device (11) extends near to one corresponding longitudinal end of the chassis (6).

6. Combined soil-working and seeding machine according to Claim 4 or 5, characterized in that the seeder (5) includes a frame (29) supporting the hopper (25) of the said seeder (5) and connected to the chassis (6) by means of a guide structure (42) which, during work, allows an upwards movement of the chassis (6) with respect to the said frame (29).

7. Combined soil-working and seeding machine according to Claim 6, characterized in that the guide structure (42) includes at least one rod (44) extending directly or indirectly between the frame (29) and the chassis (6).

8. Combined soil-working and seeding machine according to Claim 6 or 7, characterized in that the frame (29) rests on each connecting device (11) during work and during transport by means of a corresponding outer connection (63; 163; 263) which has two contact surfaces (60, 64; 160, 164; 260, 264).

9. Combined soil-working and seeding machine according to Claim 8, characterized in that, in side view, each outer connection (63; 163; 263) extends at least approximately vertically to the axis of rotation (10A) of the press roller (10).

10. Combined soil-working and seeding machine according to Claim 8 or 9, characterized in that each outer connection (163) includes a roller (167) which reduces the friction forces between the frame (29) and the said connecting device (11) as the chassis (6) moves heightwise with respect to the seeder (5).

11. Combined soil-working and seeding machine according to Claim 8 or 9, characterized in that each outer connection (263) includes a cylindrical articulation (268), the axis pivoting of which is at least approximately parallel to the axis of rotation (10A) of the press roller (10), the connecting devices (11) of the press roller (10) playing a part in guiding the seeder (5) with respect to the chassis (6).

12. Combined soil-working and seeding machine according to Claim 11, characterized in that each cylindrical articulation (268) consists of a journal (269) resting in centring members (270) and held in place by locking members (271).

13. Combined soil-working and seeding machine according to Claim 12, characterized in that the said journal (269) is fixed to the frame (29) of the seeder (5) and that the centring members (270) are provided on the corresponding connecting device (11) of the press roller (10).

14. Combined soil-working and seeding machine according to Claim 12 or 13, characterized in that the centring members (270), when viewed from the side, are in the shape of a V which is open at the top.

15. Combined soil-working and seeding machine according to one or more of Claims 12 to 15, characterized in that the locking members (271) include a removable guide support (272) intended to cap the corresponding journal (269) so as to prevent the said journal (269) from coming out of the centring members (270) while at the same time allowing this journal to rotate.

16. Combined soil-working and seeding machine according to one or more of Claims 8 to 15, characterized in that each outer connection (63; 163; 263) includes positioning members (62; 162; 262) intended to position the frame (29) with respect to the connecting devices (11) when the seeder (5) is mounted on the agricultural machine for preparing the seed bed (4).

17. Combined soil-working and seeding machine according to one or more of Claims 8 to 16, characterized in that each outer connection (63; 163; 263) includes lateral holding members (65; 165; 265) intended to hold the frame (29) transversely to the direction of forward travel (8) with respect to the connecting devices (11).

18. Combined soil-working and seeding machine according to one or more of Claims 6 to 17, characterized in that the frame (29) includes a central structure (30) intended to be connected to the chassis (6) of the agricultural machine for preparing the seed bed (4) and two lateral structures (31) fixed to the said central structure (30).

19. Combined soil-working and seeding machine according to Claim 18, characterized in that each lateral structure (31) includes at least one lateral stringer (40, 41) extending from the central structure (30) outwards and downwards as far as the vicinity of the corresponding connecting device (11).

20. Combined soil-working and seeding machine according to Claim 18 or 19, characterized in that each lateral structure (31) is fixed removably to the central structure (30).

21. Combined soil-working and seeding machine according to one or more of Claims 6 to 20, characterized in that the guide structure (42) includes a quick-fit connecting device (50) intended to be connected to a complementary connecting device (54) of the central structure (30) of the frame (29).

22. Combined soil-working and seeding machine according to Claim 21, characterized in that the quick-fit connecting device (50) is intended to come into contact with the central stop(s) (59) as it is placed in the transport position.

## Patentansprüche

1. Gerätekombination zur Bodenbearbeitung und zum Säen (1; 101; 201; 301) mit:
- einer landwirtschaftlichen Maschine zur Vorbereitung eines Saatbettes (4), die mit einem Motorfahrzeug (3) verbunden werden soll, und einerseits einen Rahmen (6), der sich quer zur Arbeitsrichtung (8) erstreckt, und andererseits eine sich während der Arbeit auf den Boden stützende Preßwalze (10) umfaßt;
und
- einer Sämaschine (5), die mit der landwirtschaftlichen Maschine zur Vorbereitung des Saatbettes (4) derart verbunden ist,
• daß während der Arbeit mindestens ein Teil des Gewichts der Sämaschine (5) direkt auf die Preßwalze (10) wirkt:
• daß beim Transport die Sämaschine (5)
* auf dem mittleren Teil (34) des Rahmens (6) mittels zumindest eines mittleren Anschlags (59) und
* zusätzlich teilweise mittels zumindest zweier seitlicher Anschläge (61), die jeweils beidseitig über dem (den) mittleren Anschlag (Anschlägen) (59) angeordnet sind, vorzugsweise zumindest im wesentlichen in der Nähe jedes longitudinalen Endes des Rahmens (6) auf letzterem (6)
aufliegt.

2. Gerätekombination zur Bodenbearbeitung und zum Säen nach Anspruch 1, dadurch gekennzeichnet, daß sie mindestens eine Einstellvorrichtung (374) umlaßt, die es ermöglicht, die Verteilung des Gewichts der Sämaschine (5) zwischen dem (den) mittleren Anschlag (Anschlägen) (59) und den seitlichen Anschlägen (61) einzustellen.

3. Gerätekombination zur Bodenbearbeitung und zum Säen nach Anspruch 2, dadurch gekennzeichnet, daß die Einstellvorrichtung (374) eine Vorrichtung mit kontinuierlicher Einstellung (375) umfaßt, zum Beispiel von der Art mit Schraube (377) und Mutter (376).

4. Gerätekombination zur Bodenbearbeitung und zum Säen nach einem oder mehreren der Ansprüche 1 bis 3, dadurch gekennzeichnet, daß die Preßwalze (10) mittels Verbindungsvorrichtungen (11) mit dein Rahmen (6) verbunden ist, und jede Verbindungsvorrichtung (11) sich während des Transports auf den jeweiligen seitlichen Anschlag (61) des Rahmens (6) stützt.

5. Gerätekombination zur Bodenbearbeitung und zum Säen nach Anspruch 4, dadurch gekennzeichnet, daß jede Verbindungsvorrichtung (11) sich nahe einem zugehörigen longitudinalen Ende des Rahmens (6) erstreckt.

6. Gerätekombination zur Bodenbearbeitung und zum Säen nach Anspruch 4 oder 5, dadurch gekennzeichnet, daß die Sämaschine (5) ein Gestell (29) umfaßt, das den Trichter (25) der Sämaschine (5) trägt und mit dein Rahmen (6) mittels einer Führungsstruktur (42) verbunden ist, die während der Arbeit eine Bewegung nach oben des Rahmens (6), bezüglich des Gestells (29), erlaubt.

7. Gerätekombination zur Bodenbearbeitung und zum Säen nach Anspruch 6, dadurch gekennzeichnet, daß die Führungsstruktur (42) mindestens eine Stange (44) umfaßt, die sich direkt oder indirekt zwischen dein Gestell (29) und dein Rahmen (6) erstreckt.

8. Gerätekombination zur Bodenbearbeitung und zum Säen nach Anspruch 6 oder 7, dadurch gekennzeichnet, daß das Gestell (29) sich während der Arbeit und während des Transports mittels einer zugehörigen, zwei Kontaktflächen (60, 64; 160, 164: 260, 264) umfassenden äußeren Verbindung (63; 163; 263) auf jede Verbindungsvorrichtung (11) stützt.

9. Gerätekombination zur Bodenbearbeitung und zum Säen nach Anspruch 8, dadurch gekennzeichnet, daß in seitlicher Ansicht jede äußere Verbindung (63; 163; 263) sich zumindest im wesentlichen senkrecht zur Drehachse (10A) der Preßwalze (10) erstreckt.

10. Gerätekombination zur Bodenbearbeitung und zum Säen nach Anspruch 8 oder 9, dadurch gekennzeichnet, daß jede äußere Verbindung (163) eine Rolle (167) umfaßt, die die Reibungswirkung zwischen dem Gestell (29) und der Verbindungsvorrichtung (11) vermindert, wenn der Rahmen (6) sich in bezug auf die Sämaschine in der Höhe verschiebt.

11. Gerätekombination zur Bodenbearbeitung und zum Säen nach Anspruch 8 oder 9, dadurch gekennzeichnet, daß jede äußere Verbindung (263) ein Drehgelenk (268) mit einer zumindest im wesentlichen zur Drehachse (10A) der Preßwalze (10) parallelen Schwenkachse umfaßt, wobei die Verbindungsvorrichtungen (11) der Preßwalze (10) an der Führung der Sämaschine (5) in bezug auf den Rahmen (6) beteiligt sind.

12. Gerätekombination zur Bodenbearbeitung und zum Säen nach Anspruch 11, dadurch gekennzeichnet, daß jedes Drehgelenk (268) aus einem Drehzapfen (269) besteht, der in Zentrierorganen (270) ruht und von Verriegelungsorganen (271) an Ort und Stelle gehalten wird.

13. Gerätekombination zur Bodenbearbeitung und zum Säen nach Anspruch 12, dadurch gekennzeichnet, daß der Drehzapfen (269) auf dem Gestell (29) der Sämaschine (5) befestigt ist und daß die Zentrierorgane (270) an der zugehörigen Verbindungsvorrichtung (11) der Preßwalze (10) vorgesehen sind.

14. Gerätekombination zur Bodenbearbeitung und zum Säen nach Anspruch 12 oder 13, dadurch gekennzeichnet, daß die Zentrierorgane (270) in seitlicher Ansicht die Form eines nach oben offenen "V" haben.

15. Gerätekombination zur Bodenbearbeitung und zum Säen nach einem oder mehreren der Ansprüche 12 bis 15, dadurch gekennzeichnet, daß die Verriegelungsorgane (271) einen lösbaren Führungsträger (272) aufweisen, der dazu bestimmt ist, den zugehörigen Drehzapfen (269) zu überdecken, so daß der Drehzapfen (269) daran gehindert wird, aus den Zentrierorganen (270) auszutreten, wobei dennoch dessen Drehung zugelassen wird.

16. Gerätekombination zur Bodenbearbeitung und zuin Säen nach einem oder mehreren der Ansprüche 8 bis 15, dadurch gekennzeichnet, daß jede äußere Verbindung (63; 163; 263) Positionierorgane (62; 162; 262) umfaßt, die dazu bestimmt sind, das Gestell (29) in bezug auf die Verbindungsvorrichtungen (11) bei der Montage der Sämaschine (5) auf der landwirtschaftlichen Maschine zur Vorbereitung des Saatbettes (4) zu positionieren.

17. Gerätekombination zur Bodenbearbeitung und zum Säen nach einem oder mehreren der Ansprüche 8 bis 16, dadurch gekennzeichnet, daß jede äußere Verbindung (63; 163; 263) seitliche Halterungsorgane (65; 165; 265) aufweist, die dazu bestimmt sind, das Gestell (29) in bezug auf die Verbindungsvorrichtungen (11) quer zur Vorfahrtrichtung (8) zu halten.

18. Gerätekombination zur Bodenbearbeitung und zum Säen nach einem oder mehreren der Ansprüche 6 bis 17, dadurch gekennzeichnet, daß das Gestell (29) eine mittlere Struktur (30) umfaßt, die dazu bestimmt ist, mit dem Rahmen (6) der landwirtschaftlichen Maschine zur Vorbereitung des Saatbettes (4) verbunden zu werden, und zwei seitliche Strukturen (31), die an der mittleren Struktur (30) befestigt sind.

19. Gerätekombination zur Bodenbearbeitung und zum Säen nach Anspruch 18, dadurch gekennzeichnet, daß jede seitliche Struktur (31) mindestens einen Längsträger (40, 41) umfaßt, der sich von der mittleren Struktur (30) nach außen und nach unten bis in die Nähe der zugehörigen Verbindungsvorrichtung (11) erstreckt.

20. Gerätekombination zur Bodenbearbeitung und zum Säen nach Anspruch 18 oder 19, dadurch gekennzeichnet, daß jede seitliche Struktur (31) in lösbarer Weise an der mittleren Struktur (30) befestigt ist.

21. Gerätekombination zur Bodenbearbeitung und zum Säen nach einem oder mehreren der Ansprüche 6 bis 20, dadurch gekennzeichnet, daß die Führungsstruktur (42) eine Schnellverbindungsvorrichtung (50) umfaßt, die dazu bestimmt ist, mit einer komplementären Verbindungsvorrichtung (54) der mittleren Struktur (30) des Gestells (29) verbunden zu werden.

22. Gerätekombination zur Bodenbearbeitung und zum Säen nach Anspruch 21, dadurch gekennzeichnet, daß die Schnellverbindungsvorrichtung (50) dazu bestimmt ist, während dessen Verbringung in die Transportposition mit dem (den) mittleren Anschlag (Anschlägen) (59) in Kontakt zu kommen.
